# EUROPÄISCHE PATENTSCHRIFT

(11) **EP 4 476 777 B1**
(45) Veröffentlichungstag und Bekanntmachung des Hinweises auf die Patenterteilung: **02.09.2026**
(21) Anmeldenummer: 23703732.0
(22) Anmeldetag: 06.02.2023
(51) Int. Cl.: H01M 4/04, H01M 10/04, H01M 10/052, H01M 10/0583, H01M 4/75, H01M 10/0562

(54) **FESTSTOFFZELLENBATTERIE SOWIE VERFAHREN ZUR HERSTELLUNG EINER SOLCHEN FESTSTOFFBATTERIE**
SOLID STATE CELL BATTERY AND METHOD OF MANUFACTURING SUCH A SOLID STATE BATTERY
BATTERIE À CELLULES SOLIDES ET MÉTHODE DE FABRICATION DE LADITE BATTERIE SOLIDE

(30) Priorität: 07.02.2022 DE 102022102761
(43) Veröffentlichungstag der Anmeldung: 18.12.2024
(73) Patentinhaber: PowerCo SE, 38239 Salzgitter (DE)
(72) Erfinder: JANSEN, Tobias, 38106 Braunschweig (DE); KLEMT, Christian, 38527 Meine (DE); TORNOW, Alexander, 29369 Ummern (DE)
(74) Vertreter: MFG Patentanwälte Meyer-Wildhagen Meggle-Freund Gerhard PartG mbB
(86) Internationale Anmeldenummer: PCT/EP2023/052764
(87) Internationale Veröffentlichungsnummer: WO 2023/148362

(56) Entgegenhaltungen:
- EP-A1- 3 910 701
- DE-A1- 102010 055 617
- DE-B3- 102012 019 975
- US-A1- 2021 020 921

## Beschreibung

Die Erfindung betrifft eine Feststoffzellenbatterie sowie ein Verfahren zur Herstellung einer solchen Feststoffzellenbatterie gemäß dem Oberbegriff der unabhängigen Patentansprüche.

Zur Produktion von Feststoffzellenbatterien (All-Solid-State-Batterien) werden feste ionisch leitende Separatoren eingesetzt, die größtenteils aus keramischen Werkstoffen hergestellt sind, welche nicht kontinuierlich verarbeitet beziehungsweise umgeformt werden können. Zur Herstellung eines Zellstapels einer solchen Batterie kann daher der Separator nicht wie bei klassischen Lithium-Ionen-Batterien mit einem flüssigen Elektrolyt z-förmig um die Anode und die Kathode gefaltet werden. Diese Limitierung kann zum einen durch die charakteristischen Materialeigenschaften des Separatormaterials und zum anderen durch die Dicke des Separators erklärt werden.

Zur Herstellung von Zellstapeln werden vorzugsweise Einzelblattstapler eingesetzt, bei denen der Batteriestapel Schicht für Schicht aufgebaut wird. Dabei wird der Batteriestapel aus einzelnen Elektroden und Separatoren zusammengesetzt und wächst stückweise in die Höhe. Ein wesentlicher Nachteil an einem solchen Verfahren liegt in der vergleichsweise hohen Prozesszeit bei dem Zusammensetzen eines Zellstapels aus Einzelelementen aufgrund der vielen Stapeloperationen. Ein weiterer Nachteil in der Herstellung einer Feststoffzellenbatterie mittels eines Einzelblattstaplers liegt darin begründet, dass ein konventioneller Einzelblattstapler nicht in der Lage ist, einen mit Klebstoff applizierten Kollektor abzulegen. Daher müsste durch einen zusätzlichen Roboter während und nach der Kollektorablage für bestimmte Zelltypen ein Klebstoff appliziert werden. Aufgrund der elektrischen Leitfähigkeit des Klebstoffs sowie des aerosolförmigen Auftrags des Klebstoffs ist dies besonders herausfordernd.

Durch den Einsatz einer Z-Faltung kann wie bei einer konventionellen Lithium-Ionen-Zelle allein aufgrund der Verringerung der Lagenanzahl beim Stapeln des Zellstapels die Produktivität um ca. 25% erhöht werden. Darüber hinaus würde ein Z-Faltprozess den Einsatz eines Kollektors, welcher bereits mit einem Klebstoff benetzt ist, ermöglichen, sodass eine Vielzahl von Problemstellungen umgangen werden können. Außerdem würde der Zellstapel eine höhere mechanische Stabilität aufweisen, was das Handling des sonst vergleichsweise labilen Zellstapel signifikant erleichtert.

Derzeit sind bei Feststoffzellen keine z-gefalteten Feststoffelektroden bekannt. Auch ein Prozess zur entsprechenden Faltung einer Elektrode beziehungsweise eines Separators ist aufgrund der beschriebenen Materialeigenschaften des keramischen Separatormaterials bislang unbekannt.

Aus der DE 10 2015 201 281 A1 ist ein Verfahren zur Herstellung einer Feststoffzellenbatterie, insbesondere einer Lithium-Ionen-Feststoffzelle, mit einer ersten Leiterschicht und einer zweiten Leiterschicht und zumindest einer Trennschicht bekannt, welche zu einem Schichtstapel aus mindestens zwei ersten Leiterschichten und mindestens zwei zweiten Leiterschichten gestapelt werden. Dabei wird die erste Leiterschicht durch die Trennschicht von der zweiten Leiterschicht getrennt. Die durch die Trennschicht getrennten Schichten der ersten Leiterschicht und/oder die durch die Trennschicht getrennten Schichten der zweiten Leiterschicht werden schichtweise elektrisch miteinander verbunden. Dabei wird zumindest eine der Leiterschichten aus einer flexiblen Bahn ausgestaltet, wobei die flexible Bahn als durchgängige Schicht, die zumindest die zwei ersten Leiterschichten und/oder die zwei zweiten Leiterschichten gemeinsam bildet, in den Schichtstapel eingelegt. Ferner ist aus der DE 10 2015 201 281 A1 eine Feststoffzellenbatterie bekannt, welche nach einem solchen Verfahren hergestellt ist.

Die WO 2017 / 158 319 A1 offenbart ein Verfahren zur Herstellung einer Energiespeichervorrichtung, bei dem ein Stapel gebildet wird, der mindestens eine erste Elektrodenschicht, eine erste Stromsammelschicht und eine zwischen der ersten Elektrodenschicht und der ersten Stromsammelschicht angeordnete Elektrolytschicht umfasst. Dazu wird eine erste Nut in dem Stapel durch die erste Elektrodenschicht und die Elektrolytschicht ausgebildet, wodurch freiliegende Kanten der ersten Elektrodenschicht und der Elektrolytschicht gebildet werden. Anschließend wird mindestens ein Teil der ersten Nut mit einem elektrisch isolierenden Material ausgefüllt, wodurch die freiliegenden Kanten der ersten Elektrodenschicht und der Elektrolytschicht mit dem isolierenden Material bedeckt werden. Das Isoliermaterial und die erste Stromsammelschicht werden entlang mindestens eines Teils der ersten Rille geschnitten, um eine freiliegende Kante der ersten Stromsammelschicht zu bilden.

Aus der DE 10 2016 219 661 A1 ist ein Verfahren zur Herstellung einer galvanischen Lithium-Ionen-Zelle bekannt. Dabei wird ein Separator zur räumlichen Trennung eines ersten Elektrodenmaterials der Lithium-Ionen-Zelle von einem zweiten Elektrodenmaterial bereitgestellt. Es ist vorgesehen, dass das erste Elektrodenmaterial durch Beschichten auf eine erste Seite des Separators aufgebracht wird. Ferner ist aus der DE 10 2016 219 661 A1 eine galvanische Lithium-Ionen-Zelle bekannt, welche nach einem solchen Verfahren hergestellt ist.

Die US 2021/0020921 A1 beschreibt eine Batteriezelle mit mindestens einer Elektrodenplatte. Die Elektrodenplatte enthält einen zusammengesetzten Stromkollektor mit einem ionisch leitenden Material und zwei aktiven Materialschichten, die auf dem zusammengesetzten Stromkollektor angeordnet sind. Die aktiven Materialschichten umfassen eine positive aktive Materialschicht und eine negative aktive Materialschicht. Der zusammengesetzte Stromkollektor ist zwischen der positiven aktiven Materialschicht und der Schicht aus negativem aktivem Material angeordnet. Jede positive aktive Materialschicht und negative aktive Materialschicht ist mit dem ionisch leitenden Material verbunden. Die Batteriezelle ist eine mehrschichtige Struktur, die durch Falten einer einzelnen Elektrodenplatte auf sich selbst oder durch Stapeln der Elektrodenplatten zusammengebaut wird, wobei benachbarte aktive Materialschichten in zwei benachbarten Schichten der Batteriezelle die gleiche Polarität aufweisen.

Die EP 3 910 701 A1 beschreibt eine Festkörperbatterie und ein Verfahren zu ihrer Herstellung. In einem Beispiel einer Ausführungsform der Festkörperbatterie und des Verfahrens zu ihrer Herstellung wird ein positiver Stromkollektor gefaltet, um positive Schichten elektrisch zu verbinden, während ein negativer Stromkollektor gefaltet wird, um negative Schichten elektrisch zu verbinden.

Aus der DE 10 2010 055 617 A1 sind ein Verfahren und eine Anlage zur Herstellung eines Elektrodenstapels aus Kathode, Anode und Separator für eine Batterie bekannt. Eine der Komponenten liegt dabei als Endlosmaterial vor. Wenigstens eine andere der Komponenten wird vereinzelt und danach an die als Endlosmaterial vorliegende Komponente angebracht. Danach wird der Elektrodenstapel fertig gestellt.

Ferner ist aus der DE 10 2012 019 975 B3 eine Stapelvorrichtung für das Stapeln scheibenförmiger Elektroden mit einer durch eine Führungseinrichtung zickzack-förmig dazwischen gelegten Separatorfolie bekannt. Die Stapelvorrichtung umfasst einen Stapeltisch, Niederhalter zum Fixieren des Stapels, Greifer zum Aufnehmen und definierten Ablegen der Elektroden, die mit einem Überdruckmodul zum gezielten Ausformen einer definierten Folientasche in der Separatorfolie ausgestattet sind.

Der Erfindung liegt nun die Aufgabe zugrunde, die Fertigung einer Feststoffzellenbatterie zu vereinfachen und die aus dem Stand der Technik bekannten Nachteile zu überwinden.

Diese Aufgabe wird durch ein Verfahren zur Herstellung einer Feststoffzellenbatterie mit einer Trägerfolie, einem Separator, einer Kathode sowie einer kontinuierlichen Kollektorfolie gelöst. Das Verfahren umfasst die folgenden Schritte:
- Ablegen der Trägerfolie auf einem Ablagetisch,
- Zuführen einer ersten Lage der kontinuierlichen Kollektorfolie mittels einer Abrollvorrichtung
- Zuführen des Separators, der Kathode sowie eines weiteren Separators in einem Stapelprozess, wobei ein Zellstapel gebildet wird,
- Zuführen einer zweiten Lage der kontinuierlichen Kollektorfolie, wobei die kontinuierliche Kollektorfolie mittels einer Abrolleinrichtung zugeführt wird, wobei
- die kontinuierliche Kollektorfolie durch eine horizontale Verschiebung des Ablagetischs und/oder durch eine horizontale Verschiebung zumindest einer Leitrolle der Abrolleinrichtung relativ zu dem Zellstapel positioniert wird, wodurch eine Faltung der Kollektorfolie erreicht wird.

Besonders vorteilhaft ist dabei, wenn die Feststoffzellenbatterie keine feste Anode aufweist, welche durch ein Stapeln einer Lithium-Anode auf den Zellstapel gebildet wird, sondern eine Anode aufweist, welche sich in-Situ an der der Kathode abgewandten Oberfläche des Separators ausbildet. Alternativ kann der Separator auch an der der Kollektorfolie zugewandten Seite metallisch beschichtet sein. Somit kann eine zusätzliche Stapeloption beim Herstellen des Zellstapels eingespart werden, was die Herstellung der Feststoffzellenbatterie deutlich beschleunigt.

Das vorgeschlagene Verfahren ermöglicht eine deutlich schnellere und einfachere Herstellung von Feststoffzellenbatterien. Insbesondere kann die Prozesszeit bei der Herstellung einer Feststoffzellenbatterie verkürzt werden, da die Kollektorfolie nicht durch einen zusätzlichen Stapelprozess auf den Zellstapel aufgetragen wird, sondern als Endlosmaterial, insbesondere als Band- oder Folienmaterial von einer Abrolleinrichtung zugeführt wird. Insbesondere wird bei einem solchen Verfahren nicht der Separator, sondern nur die Kollektorfolie gefaltet, dadurch können die Stapeloperationen bei der Herstellung des Zellstapels um 25% reduziert werden. Wird anstelle von Separator und Kathode eine Funktionseinheit aus Separator und Kathode, eine sogenannte Monozelle, beim Stapeln des Zellstapels zugeführt, kann die Anzahl der Stapeloperationen weiter reduziert werden. Umfasst die Funktionseinheit einen Separator, eine Kathode und einen weiteren Separator, und ist als sogenannte Bi-Zelle ausgeführt, kann die Anzahl der Stapeloperationen noch weiter reduziert und die Taktzeit bei der Herstellung der Feststoffzellenbatterie noch weiter verkürzt werden.

Durch die in den abhängigen Ansprüchen aufgeführten zusätzlichen Merkmale sind vorteilhafte Verbesserungen und Weiterentwicklungen des im unabhängigen Anspruch angegebenen Verfahrens zur Herstellung einer Feststoffzellenbatterie möglich.

In bevorzugter Ausgestaltung der Erfindung ist vorgesehen, dass die Kollektorfolie zumindest auf einer Seite der Kollektorfolie mit einer Klebeschicht versehen wird und die Kollektorfolie mit dem Zellstapel verklebt wird, wenn die Kollektorfolie relativ zu einer freien Oberfläche des Zellstapels positioniert ist. Durch das Auftragen einer Klebeschicht auf die Kollektorfolie kann der Herstellungsprozess weiter verbessert und beschleunigt werden. Zudem können zusätzliche Klebeprozesse entfallen, was die Prozesssicherheit im Fertigungsprozess erhöht. Darüber hinaus wird die mechanische Festigkeit des Zellstapels erhöht, da die Komponenten des Zellstapels durch die Klebeschicht auf der Kollektorfolie fixiert werden. Dadurch wird insbesondere auch das Handling des Zellstapels sowie das Stapeln weiterer Elemente des Zellstapels, insbesondere weiterer Separatoren, Kathoden erleichtert.

Besonders bevorzugt ist dabei, wenn die Klebeschicht als ein UV-aktivierbarer Klebstoff auf die Kollektorfolie aufgetragen wird und mittels einer UV-Strahlungsquelle, insbesondere einer UV-Lampe, aktiviert wird, wenn die Kollektorfolie relativ zu dem Zellstapel positioniert ist. Ein UV-aktivierbarer Klebstoff ermöglicht eine besonders einfache Zuführung der Kollektorfolie, da bei der Zufuhr keine Gefahr besteht, dass die Kollektorfolie an den Leitrollen der Abrollvorrichtung verklebt.

In weiterer bevorzugter Ausgestaltung der Erfindung ist vorgesehen, dass die Klebeschicht als ein Haftklebstoff auf die Kollektorfolie aufgetragen wird. Eine Haftklebeschicht ermöglicht ebenfalls auf einfache und kostengünstige Art und Weise, eine bereits mit einer Klebeschicht versehene Kollektorfolie dem Zellstapel der Feststoffzellenbatterie zuzuführen und diesen Zellstapel mit der Kollektorfolie zu verkleben.

Alternativ ist mit Vorteil vorgesehen, dass die Klebeschicht als ein reaktiver Klebstoff auf die Kollektorfolie aufgetragen wird, wobei der reaktive Klebstoff bei Kontakt mit dem Zellstapel oder mit einem Aktivator, insbesondere mit Luft aktiviert wird.

Besonders bevorzugt ist dabei, wenn die Kollektorfolie mit einer Schutzschicht, insbesondere mit einer Schutzfolie, überzogen ist und diese Schutzschicht beim Zuführen der Kollektorfolie zum Zellstapel entfernt wird. Dabei können insbesondere die Haftklebeschicht oder der reaktive Klebstoff solange durch die Schutzschicht abgedeckt werden, bis die Kollektorfolie unmittelbar von einer letzten Leitrolle der Abrollvorrichtung dem Zellstapel zugeführt wird. Somit kann die Gefahr eines Verklebens der Abrolleinrichtung oder die Gefahr einer zu frühzeitigen Aktivierung des reaktiven Klebstoffs minimiert werden.

In einer alternativen Ausgestaltung des Verfahrens ist vorgesehen, dass ein Klebstoff auf den Zellstapel aufgetragen, insbesondere aufgesprüht, wird und die Kollektorfolie mit dem Zellstapel verklebt wird.

In einer vorteilhaften Ausgestaltung des Verfahrens ist vorgesehen, dass die Feststoffzellenbatterie mehrere Kompartments aufweist, wobei die Zufuhrrichtung der Kollektorfolie zwischen den unterschiedlichen Kompartments alternierend gewechselt wird. Dadurch kann auf einfach Art eine mäanderförmige Faltung der Kollektorfolie erreicht werden.

In einer weiteren vorteilhaften Ausgestaltung des Verfahrens ist vorgesehen, dass eine Höhe des Zellstapels überwacht wird und die Kollektorfolie abgetrennt wird, wenn der Zellstapel eine definierte Zielhöhe oder eine definierte Anzahl an Kompartments erreicht hat. Dadurch kann ein Abtrennen der Kollektorfolie und ein abschließendes Verkleben der Kollektorfolie mit dem Zellstapel eingeleitet werden.

In einer weiteren Verbesserung des Verfahrens ist vorgesehen, dass der Zellstapel nach Erreichen einer definierten Anzahl von Kompartments oder einer definierten Stapelhöhe des Zellstapels mit der Trägerfolie umwickelt wird. Dadurch ist eine einfache Isolation des Zellstapels möglich

Eine zur Herstellung einer solchen Feststoffzellenbatterie geeignete Anlage umfasst mindestens einen Ablagetisch, mindestens einen Roboter zum Aufbau eines Zellstapels, eine Abrolleinrichtung zur Zufuhr der Kollektorfolie zum Zellstapel, eine Abtrennvorrichtung zum Abtrennen der Kollektorfolie und ein Steuergerät. Das Steuergerät weist eine Speichereinheit und eine Recheneinheit auf, wobei in der Speichereinheit ein maschinenlesbarer Programmcode abgelegt ist. Das Steuergerät führt ein in den vorhergehenden Abschnitten beschriebenes Verfahren aus, wenn der in der Speichereinheit abgelegte maschinenlesbare Programmcode durch die Recheneinheit des Steuergerätes ausgeführt wird. Eine solche Anlage ermöglicht eine schnelle und kostengünstige Herstellung von Feststoffzellenbatterien.

Ein weiterer Teilaspekt der Erfindung betrifft eine Feststoffzellenbatterie mit einer Trägerfolie, einen ersten Separator, einer Kathode, einen zweiten Separator sowie eine kontinuierliche Kollektorfolie, wobei die Feststoffzellenbatterie nach einem in den vorhergehenden Abschnitten beschriebenen Verfahren hergestellt ist. Durch die Reduzierung der Stapeloperationen und die Verkürzung des Zeitaufwands beim Stapelprozess können die Herstellungskosten für eine solche Feststoffzellenbatterie verringert werden.

In einer vorteilhaften Ausgestaltung der Feststoffzellenbatterie ist vorgesehen, dass die Kollektorfolie eine metallische Folie, insbesondere eine Kupferfolie, eine Aluminiumfolie oder eine Kunststofffolie mit einer Beschichtung aus einem elektrisch leitenden Material, ist. Damit die Kollektorfolie zum einen elektrisch leitend ist und zum anderen eine genügend hohe mechanische Festigkeit aufweist, ist die Verwendung einer metallischen Folie als Kollektorfolie günstig. In Bezug auf die elektrische Leitfähigkeit und die Zuführbarkeit als Endlosmaterial ist eine Kupferfolie als Kollektorfolie besonders bevorzugt. Alternativ kann eine Kollektorfolie aus Aluminium oder eine mit Aluminium beschichtete Kollektorfolie genutzt werden. Dies kann nur bei Feststoffzellen funktionieren, da kein flüssiges Elektrolyt vorhanden ist, der das Aluminium auf der Anodenseite auflösen könnte.

Die Kollektorfolie kann auch eine zusätzliche Beschichtung mit mindestens einem zusätzlichen Layer aufweisen. Dieser Layer kann beispielsweise ein elektrisch leitendes Metall oder einen Separator umfassen.

Die Kollektorfolie kann auch aus einem thermoplastischen oder duroplastischen Kunststoff bestehen, welcher auf beiden Seiten mit einem elektrisch leitenden Material, insbesondere Kupfer, Aluminium oder Kohlenstoff, beschichtet ist.

In einer weiteren Verbesserung der Feststoffzellenbatterie ist vorgesehen, dass an der Kollektorfolie eine Ableitkontur ausgebildet ist. Durch die Ableitkontur kann das Gewicht der Kollektorfolie reduziert werden. Zudem kann die elektrische Kontaktierung der Kompartments vereinfacht werden, da zwischen den Ableitkonturen jeweils Freiräume entstehen, welche das elektrisch Kontaktieren vereinfachen. Zudem kann durch eine gezielte geometrische Ausgestaltung der Ableitkontur die Temperaturverteilung in der Feststoffzelle optimiert werden und der Übergangswiderstand an die Kontaktierung auf der Kathodenseite angepasst werden.

Gemäß einer vorteilhaften Ausgestaltung der Feststoffzellenbatterie ist die Kollektorfolie zumindest auf einer Seite mit einer Klebeschicht aus einem elektrisch leitenden Klebstoff versehen. Vorzugsweise ist die Kollektorfolie auf beiden Seiten mit einem elektrisch leitenden Klebstoff versehen. Alternativ oder zusätzlich ist ein elektrisch leitender Klebstoff auf die Kollektorfolie oder ein mit der Kollektorfolie zu verbindendes Bauteil aufgetragen. Um einen einfachen Elektronendurchgang an der Klebestelle zu ermöglichen, ist es vorteilhaft, dass zumindest eine Seite der Kollektorfolie, vorzugsweise beide Seiten der Kollektorfolie mit einem elektrisch leitenden Klebstoff versehen sind. Dies kann insbesondere durch eine Beschichtung oder eine Sprühapplikation eines Klebstoffs erfolgen.

In einer bevorzugten Ausgestaltung der Feststoffzellenbatterie ist vorgesehen, dass die Feststoffzellenbatterie mehrere Kompartments umfasst, wobei die Kollektorfolie mäanderförmig oder S-förmig zwischen den einzelnen Kompartments angeordnet ist. Dadurch kann auf einfache Art und Weise ein Endlosmaterial, insbesondere ein Folien- oder Bandmaterial mit den festen Komponenten, insbesondere den Separatoren und Kathoden des Zellstapels verbunden werden.

Die verschiedenen, in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel für eine erfindungsgemäße Feststoffzellenbatterie;
- Figur 2: eine zur Ausführung des erfindungsgemäßen Verfahrens zur Herstellung einer erfindungsgemäßen Feststoffzellenbatterie eingerichtete Anlage zur Herstellung einer erfindungsgemäßen Feststoffzellenbatterie;
- Figur 3: ein erfindungsgemäßes Verfahren zur Herstellung einer solchen Feststoffzellenbatterie; und
- Figur 4: ein Ablaufdiagramm zur Durchführung eines erfindungsgemäßen Verfahrens zur Herstellung einer Feststoffzellenbatterie.

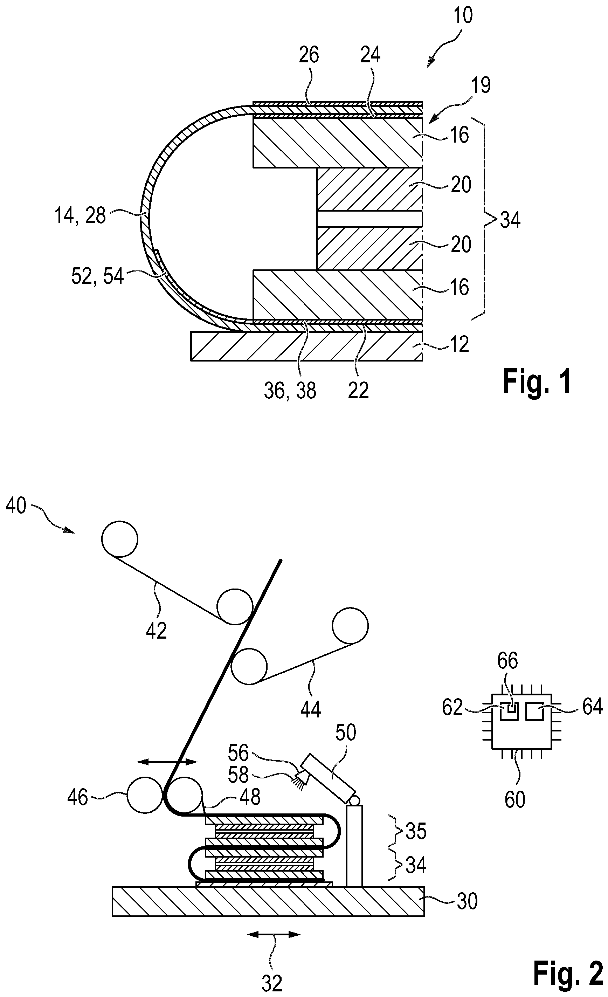

Figur 1 zeigt eine schematische Darstellung eines Zellstapels 19 einer erfindungsgemäßen Feststoffzellenbatterie 10. Aufgrund des Aufbaus bestimmter Feststoffzellenbatterien 10 ist es möglich, eine Kollektorfolie 14 mäanderförmig oder S-förmig um einen Zellstapel 19 aus einem Separator 16 und einer Kathode 20 zu falten. Dabei wird vorzugsweise eine mit einem elektrisch leitenden Klebstoff, insbesondere einer elektrisch leitenden Klebeschicht 24 benetzte oder beschichtete metallische Kollektorfolie 14, insbesondere eine Kupferfolie 28, eine Aluminiumfolie oder eine mit einem elektrisch leitfähigen Metall beschichtete Kunststofffolie, verwendet. Durch die mäanderförmige Faltung kann ein zusätzlicher "Pick-and-Place"-Prozess vermieden werden, wodurch die Prozesszeit bei der Herstellung der Feststoffzellenbatterie 10 verkürzt werden kann. An der Kollektorfolie 14 kann eine Ableitkontur 22 ausgebildet sein. Die Klebeschicht 24 kann insbesondere einen UV-aktivierbaren Klebstoff 26, einen Haftklebstoff 36 oder einen reaktiven Klebstoff 38 aufweisen. In Figur 1 ist eine Mono-Zelle mit nur einem Kompartment 34 dargestellt, das vorgeschlagene Verfahren eignet sich aber insbesondere für Feststoffzellenbatterien 10 mit mehreren Kompartments 34, 35, 37. Die Klebeschicht 24 kann als ein- oder mehrkomponentige Klebeschicht 24 ausgeführt sein. Ist auf der Kollektorfolie 14 eine Schutzschicht 52, insbesondere eine Schutzfolie 54 aufgebracht, so wird die Schutzschicht 52 unmittelbar vor der Verbindung der Kollektorfolie 14 mit dem Zellstapel 19 entfernt.

In Figur 2 ist eine Anlage 100 zur Herstellung einer solchen Feststoffzellenbatterie 10 dargestellt. Die Anlage 100 umfasst mindestens einen Ablagetisch 30, mindestens einen Roboter 50, insbesondere ein Pick-and-Place System zum Aufbau eines Zellstapels 19, eine Abrolleinrichtung 40 zur Zufuhr der Kollektorfolie 14 zum Zellstapel 19, eine Abtrennvorrichtung 48 zum Abtrennen der Kollektorfolie 14 und ein Steuergerät 60 zur Steuerung des Herstellungsprozesses. Das Steuergerät 60 umfasst eine Speichereinheit 62, in welcher ein maschinenlesbarer Programmcode 66 abgelegt ist und eine Recheneinheit 64 zur Ausführung des Programmcodes. Zur Herstellung der Feststoffzellenbatterie 10 wird zunächst eine Trägerfolie 12, insbesondere ein Kunststoffsubstrat, auf einem in Figur 2 dargestellten Ablagetisch 30 abgelegt und fixiert. Anschließend wird die Kollektorfolie 14 auf diese Trägerfolie 12 aufgewalzt und/oder aufgeklebt. Dabei kann das Abrollen der Kollektorfolie 14, wie in Figur 2 dargestellt, durch das Verschieben einer oder mehrerer Leitrollen 42, 44, 46 einer Abrolleinrichtung 40 oder durch ein Verschieben des Ablagetisches 30 erfolgen. Vorzugsweise wird, wie in Figur 2 dargestellt, eine Abrolleinrichtung 40 mit einer ersten Leitrolle 42, einer zweiten Leitrolle 44 und einer dritten Leitrolle 46. Dabei wird die Kollektorfolie 14 durch die Leitrollen 42, 44, 46 gespannt. Die dritte Leitrolle 46 dient der Positionierung der Kollektorfolie 14 relativ zum Zellstapel 19. Die erste Leitrolle 42 und die zweite Leitrolle 44 können neben der Spannfunktion der Kollektorfolie 14 auch noch zusätzliche Funktionen aufweisen, insbesondere das Auftragen einer Klebeschicht oder das Entfernen einer Schutzfolie 54, welche auf der Kollektorfolie 14 aufgetragen ist.. Zur Verschiebung des Ablagetischs 30 ist an dem Ablagetisch 30 eine Verschiebeeinrichtung 32 vorgesehen, mit welcher der Ablagetisch 30 in horizontaler Richtung verschiebbar ist. In einem folgenden Prozessschritt werden durch einen oder mehrere Roboter 50 ein Separator 16, eine Kathode 20 und ein weiterer Separator 16 definiert zu einem Zellstapel 19 auf der Kollektorfolie 14 abgelegt. Nach der Ablage der Batterieelemente fahren die Leitrollen 42, 44, 46 die mit Klebstoff 24 benetzte Kollektorfolie 14 über den Zellstapel 19, wobei die Kollektorfolie 14 mäanderförmig gefaltet wird. Die beschriebene Vorgehensweise wird solange wiederholt, bis eine definierte Anzahl von Kompartments 34, 35, 37 erreicht ist. Abschließend wir die Kollektorfolie 14 durch eine Abtrennvorrichtung 48 abgetrennt und steht für den Aufbau des nächsten Zellstapels 19 bereit. Bevorzugt steht auf jeder Seite des Zellstapels 19 ein Roboter 50, um den Aufbau des Zellstapels 19 zu beschleunigen und die Verfügbarkeit der Komponenten zu erhöhen. Zur Beschleunigung des Aufbaus des Zellstapels 19 können vorgefertigte Bauelemente, welche einen Separator-Kathoden-Verbund oder einen Separator-Kathoden-Separator-Verbund aufweisen, benutzt werden. Die Anode (metallisches Lithium) der Feststoffzellenbatterie 10 kann sich in-Situ an der der Kathode 20 abgewandten Seite des Separators 16 bilden. Die Anode kann somit Teil des Separators 16 sein und kann bei jedem Ladevorgang aufgebaut und bei jedem Entladevorgang der Feststoffzellenbatterie 10 wieder abgebaut werden. Alternativ kann die Anode auch Teil der Kollektorfolie 14 sein bzw. sich an einer dem Separator 16 zugewandten Oberfläche der Kollektorfolie ausbilden. Grundsätzlich wird das metallische Lithium der Anode bei der erfindungsgemäßen Feststoffzellenbatterie 10 durch elektrochemische Prozesse aufgebaut.

Der Roboter 50 kann eine Sprühvorrichtung 56 aufweisen, mit welcher ein Klebstoff 58 auf den Zellstapel 19 aufgebracht wird, um den Zellstapel 19 mit der Kollektorfolie 14 zu verkleben.

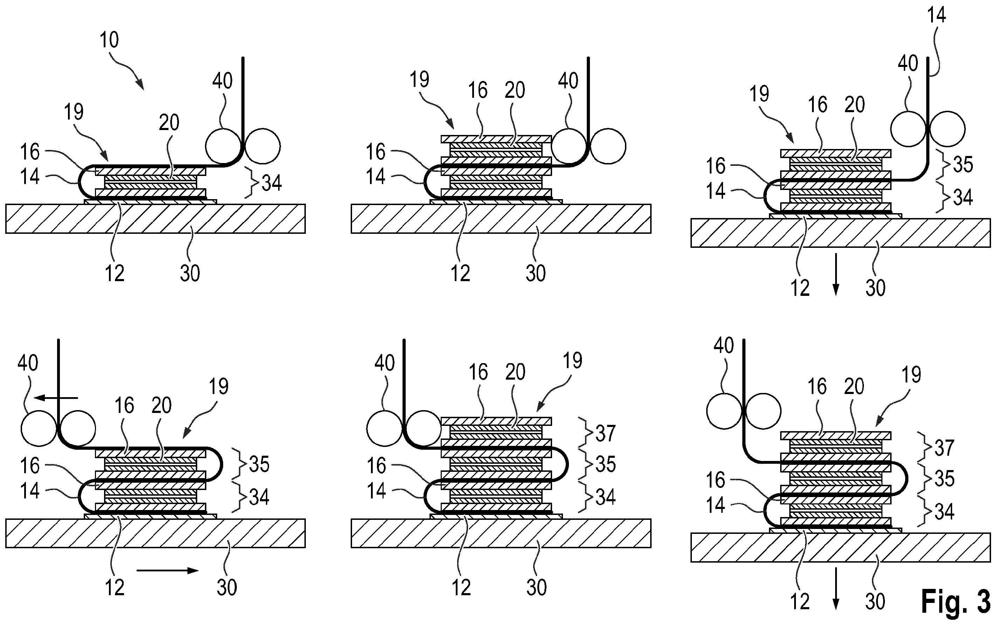

In Figur 3 ist der Ablauf bei der Herstellung einer erfindungsgemäßen Feststoffzellenbatterie 10 dargestellt. Wie schon zu Figur 2 ausgeführt, wird in einem ersten Herstellungsschritt eine Trägerfolie 12 auf den Ablagetisch 30 abgelegt und fixiert. Danach wird die Kollektorfolie 14 auf diese Trägerfolie 12 aufgewalzt und/oder aufgeklebt und die entsprechenden Separatoren 16, und Kathoden 20 auf die Kollektorfolie14 gestapelt. Dann wird eine zweite Schicht der Kollektorfolie 14 auf den Zellstapel 19 aufgebracht, wobei die Zufuhrrichtung entgegengesetzt der Zufuhrrichtung der ersten Lage der Kollektorfolie 14 ist. Die Zufuhr wird durch die Leitrollen 42, 44, 46 der Abrolleinrichtung 40 gesteuert.

In einem weiteren Prozessschritt 2 werden erneut die unflexiblen Komponenten 16, 18, 20 auf dem Zellstapel 19 gestapelt. Ferner wird in einem Prozessschritt 3 der Ablagetisch 30 nach unten und/oder die unterste Leitrolle 46 der Abrollvorrichtung 40 nach oben verschoben, um zusätzlichen Platz für ein weiteres Kompartment 35, 37 des Zellstapels 19 der Feststoffzellenbatterie 10 zu schaffen.

In einem Prozessschritt 4 wird die unterste Leitrolle 46 der Abrollvorrichtung 40 und/oder der Ablagetisch in horizontaler Richtung verschoben, um eine weitere Lage der Kollektorfolie 14 auf dem Zellstapel 19 abzulegen und die Kollektorfolie 19 wie beschrieben mäanderförmig zu falten.

Im Prozessschritt 5 erfolgen weitere Stapeloperationen von Separator 16, Anode 18, Kathode 20 und sonstigen unflexiblen Batteriekomponenten. In einem abschließenden Prozessschritt 6 wird die Kollektorfolie 14 abgetrennt, wenn eine definierte Anzahl an Kompartments 34, 35, 37 erreicht ist oder der Zellstapel 19 eine definierte Höhe erreicht hat. Dabei wird das freie Ende der Kollektorfolie 14 mit der Oberfläche des oben auf dem Zellstapel 19 liegenden Separators 18 verklebt.

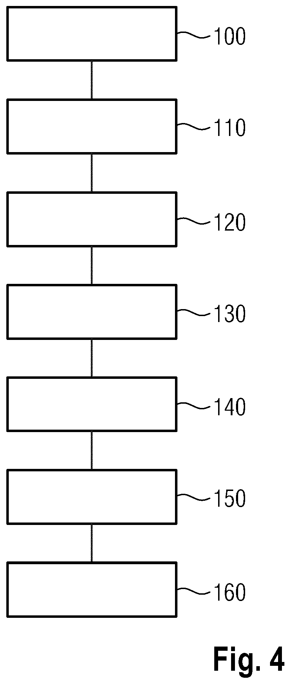

Figur 4 zeigt ein Ablaufdiagramm zur Herstellung einer solchen Feststoffzellenbatterie 10. In einem Verfahrensschritt <100> wird zunächst eine Trägerfolie 12, insbesondere ein Kunststoffsubstrat, auf den Ablagetisch 30 abgelegt und dort fixiert. In einem Verfahrensschritt <110> wird die Kollektorfolie 14 in Form eines Bandmaterials zugeführt und anschließend in einem Verfahrensschritt <120< mit der Trägerfolie 12 verklebt. In einem weiteren Verfahrensschritt <130> werden durch einen oder mehrere Roboter 50 ein Separator 16, eine Kathode und ein weiterer Separator 16 auf die Kollektorfolie 14 gestapelt, sodass ein Zellstapel 19 entsteht. In einem Verfahrensschritt <140> wird der Ablagetisch 30 und/oder zumindest eine Leitrolle 42, 44, 46 der Abrolleinrichtung 40 verschoben, um dem Zellstapel 19 erneut die Kollektorfolie 14 zuzuführen. Dabei erfolgt diese Zuführung von der der ersten Zuführung entgegengesetzten Richtung, sodass die Kollektorfolie 14 mäanderförmig gefaltet wird. In einem Verfahrensschritt <150> wird die Höhe des Zellstapels 19 oder die Anzahl der Kompartments 34, 35, 37 des Zellstapels 19 bestimmt. Hat der Zellstapel 19 seine Zielhöhe und/oder die gewünschte Anzahl an Kompartments 34, 35, 37 erreicht, so wird die Kollektorfolie 14 in einem Verfahrensschritt <160> vom Bandmaterial abgetrennt und final mit der Oberfläche des letzten freien Separators 16 verklebt.

### Bezugszeichenliste

- 10: Feststoffbatterie
- 12: Trägerfolie
- 14: Kollektorfolie
- 16: Separator
- 19: Zellstapel

- 20: Kathode
- 22: Ableitkontur
- 24: Klebeschicht
- 26: UV-aktivierbarer Klebstoff
- 28: Kupferfolie

- 30: Ablagetisch
- 32: Verschiebeeinrichtung
- 34: erstes Kompartment
- 35: zweites Kompartment
- 36: Haftklebstoff
- 37: drittes Kompartment
- 38: reaktiver Klebstoff

- 40: Abrolleinrichtung
- 42: erste Leitrolle
- 44: zweite Leitrolle
- 46: dritte Leitrolle
- 48: Abtrennvorrichtung

- 50: Roboter
- 52: Schutzschicht
- 54: Schutzfolie
- 56: Sprühvorrichtung
- 58: Klebstoff
- 60: Steuergerät
- 62: Speichereinheit
- 64: Recheneinheit
- 66: maschinenlesbarer Programmcode

## Patentansprüche

1. Verfahren zur Herstellung einer Feststoffzellenbatterie (10), umfassend eine Trägerfolie (12), einen Separator (16), eine Kathode (20) sowie eine kontinuierliche Kollektorfolie (14), wobei das Verfahren folgende Schritte umfasst:
- Ablegen der Trägerfolie (12) auf einem Ablagetisch (30),
- Zuführen einer ersten Lage der kontinuierlichen Kollektorfolie (14) mittels einer Abrollvorrichtung (40),
- Zuführen des Separators (16), der Kathode (20) sowie eines weiteren Separators (16) in einem Stapelprozess, wobei ein Zellstapel (19) gebildet wird,
- Zuführen einer zweiten Lage der kontinuierlichen Kollektorfolie (14), wobei die Kollektorfolie (14) mittels einer Abrolleinrichtung (40) zugeführt wird, wobei
- die kontinuierliche Kollektorfolie (14) durch eine horizontale Verschiebung des Ablagetischs (30) und/oder durch eine horizontale Verschiebung zumindest einer Leitrolle (42, 44, 46) der Abrolleinrichtung (40) relativ zu dem Zellstapel (19) positioniert wird, wodurch eine Faltung der Kollektorfolie (14) erreicht wird.

2. Verfahren zur Herstellung einer Feststoffzellenbatterie (10) nach Anspruch 1, wobei die Kollektorfolie (14) zumindest auf einer Seite der Kollektorfolie (14) mit ein Klebeschicht (24) versehen wird und die Kollektorfolie (14) mit dem Zellstapel (19) verklebt wird, wenn die Kollektorfolie (14) relativ zu einer freien Oberfläche des Zellstapels (19) positioniert ist.

3. Verfahren zur Herstellung einer Feststoffzellenbatterie (10) nach Anspruch 2, wobei die Klebeschicht (24) als ein UV-aktivierbarer Klebstoff auf die Kollektorfolie (14) aufgetragen wird und mittels einer UV-Strahlungsquelle aktiviert wird, wenn die Kollektorfolie (14) relativ zu dem Zellstapel (19) positioniert ist.

4. Verfahren zur Herstellung einer Feststoffzellenbatterie (10) nach Anspruch 2, wobei die Klebeschicht (24) als ein Haftklebstoff (36) auf der Kollektorfolie (14) aufgetragen wird.

5. Verfahren zur Herstellung einer Feststoffzellenbatterie (10) nach Anspruch 2, wobei die Klebeschicht (24) als ein reaktiver Klebstoff (38) auf der Kollektorfolie (14) aufgetragen wird, wobei der reaktive Klebstoff (38) bei Kontakt mit dem Zellstapel (19) aktiviert wird.

6. Verfahren zur Herstellung einer Feststoffzellenbatterie (10) nach einem der Ansprüche 3 bis 5, wobei die Kollektorfolie (14) mit mindestens einer Schutzschicht (52), insbesondere mindestens einer Schutzfolie, überzogen ist und diese Schutzschicht (52) beim Zuführen der Kollektorfolie (14) zum Zellstapel (19) entfernt wird.

7. Verfahren zur Herstellung einer Feststoffzellenbatterie (10) nach Anspruch 1, wobei ein Klebstoff (58) auf den Zellstapel (19) aufgesprüht wird und die Kollektorfolie (14) mit dem Zellstapel (19) verklebt wird.

8. Verfahren zur Herstellung einer Feststoffzellenbatterie (10) nach einem der Ansprüche 1 bis 7, wobei die Feststoffzellenbatterie (10) mehrere Kompartments (34, 35, 37) aufweist, wobei die Zufuhrrichtung der Kollektorfolie (14) zwischen den unterschiedlichen Kompartments (34, 35, 37) alternierend gewechselt wird.

9. Verfahren zur Herstellung einer Feststoffzellenbatterie (10) nach einem der Ansprüche 1 bis 8, wobei eine Höhe des Zellstapels (19) überwacht wird und die Kollektorfolie (14) abgetrennt wird, wenn der Zellstapel (19) eine definierte Zielhöhe erreicht hat.

10. Verfahren zur Herstellung einer Feststoffzellenbatterie (10) nach einem der Ansprüche 1 bis 9, wobei der Zellstapel (19) nach Erreichen einer definierten Anzahl von Kompartments (34, 35, 37) oder einer definierten Stapelhöhe des Zellstapels (19) mit der Trägerfolie (12) umwickelt wird.

11. Feststoffzellenbatterie (10), umfassend eine Trägerfolie (12), einen ersten Separator (16), eine Kathode (20), einen zweiten Separator (16) sowie eine kontinuierliche Kollektorfolie (14), wobei die Feststoffzellenbatterie (10) mit einem Verfahren nach einem der Ansprüche 1 bis 10 hergestellt ist.

12. Feststoffzellenbatterie (10) nach Anspruch 11, wobei die Kollektorfolie (14) eine metallische Folie, insbesondere eine Kupferfolie (28), eine Aluminiumfolie oder eine mit einem elektrisch leitenden Metall beschichtete Kunststofffolie ist.

13. Feststoffzellenbatterie (10) nach Anspruch 11 oder 12, wobei an der Kollektorfolie (14) eine Ableitkontur (22) ausgebildet ist.

14. Feststoffzellenbatterie (10) nach einem der Ansprüche 11 bis 13, wobei die Feststoffzellenbatterie (10) mehrere Kompartments (34, 35, 37) umfasst, wobei die Kollektorfolie (14) mäanderförmig oder S-förmig zwischen den einzelnen Kompartments (34, 35, 37) angeordnet ist.

## Claims

1. Method for producing a solid-state battery (10), comprising a carrier film (12), a separator (16), a cathode (20) and a continuous collector film or foil (14), wherein the method comprises the following steps:
- placing the carrier film (12) on a work table (30),
- supplying a first layer of the continuous collector film or foil (14) by means of an unrolling device (40),
- supplying the separator (16), the cathode (20) and a further separator (16) in a stacking process, with a cell stack (19) being formed,
- supplying a second layer of the continuous collector film or foil (14), with the collector film or foil (14) being supplied by means of an unrolling device (40), wherein
- the continuous collector film or foil (14) is positioned relative to the cell stack (19) by horizontal displacement of the work table (30) and/or by horizontal displacement of at least one guide roller (42, 44, 46) of the unrolling device (40), as a result of which the collector film or foil (14) is folded.

2. Method for producing a solid-state battery (10) according to Claim 1, wherein the collector film or foil (14) is provided with an adhesive layer (24) at least on one side of the collector film or foil (14) and the collector film or foil (14) is adhesively bonded to the cell stack (19) when the collector film or foil (14) is positioned relative to a free surface of the cell stack (19).

3. Method for producing a solid-state battery (10) according to Claim 2, wherein the adhesive layer (24) is applied to the collector film or foil (14) as a UV-activatable adhesive and is activated by means of a UV radiation source when the collector film or foil (14) is positioned relative to the cell stack (19).

4. Method for producing a solid-state battery (10) according to Claim 2, wherein the adhesive layer (24) is applied to the collector film or foil (14) as a pressure-sensitive adhesive (36).

5. Method for producing a solid-state battery (10) according to Claim 2, wherein the adhesive layer (24) is applied to the collector film or foil (14) as a reactive adhesive (38), wherein the reactive adhesive (38) is activated on contact with the cell stack (19).

6. Method for producing a solid-state battery (10) according to any of Claims 3 to 5, wherein the collector film or foil (14) is coated with at least one protective layer (52), in particular at least one protective film, and this protective layer (52) is removed when the collector film or foil (14) is supplied to the cell stack (19).

7. Method for producing a solid-state battery (10) according to Claim 1, wherein an adhesive (58) is sprayed onto the cell stack (19) and the collector film or foil (14) is adhesively bonded to the cell stack (19).

8. Method for producing a solid-state battery (10) according to any of Claims 1 to 7, wherein the solid-state battery (10) has a plurality of compartments (34, 35, 37), wherein the supply direction of the collector film or foil (14) is changed in an alternating manner between the different compartments (34, 35, 37).

9. Method for producing a solid-state battery (10) according to any of Claims 1 to 8, wherein a height of the cell stack (19) is monitored and the collector film or foil (14) is separated when the cell stack (19) has reached a defined target height.

10. Method for producing a solid-state battery (10) according to any of Claims 1 to 9, wherein the carrier film (12) is wound around the cell stack (19) after a defined number of compartments (34, 35, 37) or a defined stack height of the cell stack (19) has been reached.

11. Solid-state battery (10), comprising a carrier film (12), a first separator (16), a cathode (20), a second separator (16) and a continuous collector film or foil (14), wherein the solid-state battery (10) is produced using a method according to any of Claims 1 to 10.

12. Solid-state battery (10) according to Claim 11, wherein the collector film or foil (14) is a metallic foil, in particular a copper foil (28), an aluminium foil or a plastic film coated with an electrically conductive metal.

13. Solid-state battery (10) according to Claim 11 or 12, wherein a discharge contour (22) is formed on the collector film or foil (14).

14. Solid-state battery (10) according to any of Claims 11 to 13, wherein the solid-state battery (10) comprises a plurality of compartments (34, 35, 37), wherein the collector film or foil (14) is arranged between the individual compartments (34, 35, 37) in a meandering or S-shaped manner.

## Revendications

1. Procédé de fabrication d'une batterie à cellules solides (10), comprenant un film support (12), un séparateur (16), une cathode (20) ainsi qu'un film collecteur continu (14), le procédé comprenant les étapes suivantes :
- le dépôt du film support (12) sur une table de dépôt (30),
- l'amenée d'une première couche du film collecteur continu (14) au moyen d'un dispositif de déroulement (40),
- l'amenée du séparateur (16), de la cathode (20) ainsi que d'un autre séparateur (16) dans un processus d'empilement, un empilement de cellules (19) étant formé,
- l'amenée d'une deuxième couche du film collecteur continu (14), le film collecteur (14) étant amené au moyen d'un appareil de déroulement (40),
- le film collecteur continu (14) étant positionné par un déplacement horizontal de la table de dépôt (30) et/ou par un déplacement horizontal d'au moins un rouleau de guidage (42, 44, 46) de l'appareil de déroulement (40) par rapport à l'empilement de cellules (19), ce qui permet d'obtenir un pliage du film collecteur (14).

2. Procédé de fabrication d'une batterie à cellules solides (10) selon la revendication 1, le film collecteur (14) étant pourvu d'une couche adhésive (24) sur au moins un côté du film collecteur (14) et le film collecteur (14) étant collé à l'empilement de cellules (19) lorsque le film collecteur (14) est positionné par rapport à une surface libre de l'empilement de cellules (19).

3. Procédé de fabrication d'une batterie à cellules solides (10) selon la revendication 2, la couche adhésive (24) étant appliquée sur le film collecteur (14) sous la forme d'un adhésif activable par UV et étant activée au moyen d'une source de rayonnement UV lorsque le film collecteur (14) est positionné par rapport à l'empilement de cellules (19).

4. Procédé de fabrication d'une batterie à cellules solides (10) selon la revendication 2, la couche adhésive (24) étant appliquée sur le film collecteur (14) sous la forme d'un adhésif sensible à la pression (36).

5. Procédé de fabrication d'une batterie à cellules solides (10) selon la revendication 2, la couche adhésive (24) étant appliquée sur le film collecteur (14) sous la forme d'un adhésif réactif (38), l'adhésif réactif (38) étant activé au contact de l'empilement de cellules (19).

6. Procédé de fabrication d'une batterie à cellules solides (10) selon l'une des revendications 3 à 5, le film collecteur (14) étant revêtu d'au moins une couche de protection (52), notamment d'au moins un film de protection, et cette couche de protection (52) étant retirée lors de l'amenée du film collecteur (14) vers l'empilement de cellules (19).

7. Procédé de fabrication d'une batterie à cellules solides (10) selon la revendication 1, un adhésif (58) étant pulvérisé sur l'empilement de cellules (19) et le film collecteur (14) étant collé à l'empilement de cellules (19).

8. Procédé de fabrication d'une batterie à cellules solides (10) selon l'une des revendications 1 à 7, la batterie à cellules solides (10) présentant plusieurs compartiments (34, 35, 37), la direction d'amenée du film collecteur (14) étant alternée entre les différents compartiments (34, 35, 37).

9. Procédé de fabrication d'une batterie à cellules solides (10) selon l'une des revendications 1 à 8, une hauteur de l'empilement de cellules (19) étant surveillée et le film collecteur (14) étant séparé lorsque l'empilement de cellules (19) a atteint une hauteur cible définie.

10. Procédé de fabrication d'une batterie à cellules solides (10) selon l'une des revendications 1 à 9, l'empilement de cellules (19) étant enveloppé avec le film support (12) après avoir atteint un nombre défini de compartiments (34, 35, 37) ou une hauteur d'empilement définie de l'empilement de cellules (19).

11. Batterie à cellules solides (10), comprenant un film support (12), un premier séparateur (16), une cathode (20), un deuxième séparateur (16) ainsi qu'un film collecteur continu (14), la batterie à cellules solides (10) étant fabriquée par un procédé selon l'une des revendications 1 à 10.

12. Batterie à cellules solides (10) selon la revendication 11, le film collecteur (14) étant un film métallique, notamment un film en cuivre (28), un film en aluminium ou un film en matière plastique revêtu d'un métal électriquement conducteur.

13. Batterie à cellules solides (10) selon la revendication 11 ou 12, un contour de dérivation (22) étant formé sur le film collecteur (14).

14. Batterie à cellules solides (10) selon l'une des revendications 11 à 13, la batterie à cellules solides (10) comprenant plusieurs compartiments (34, 35, 37), le film collecteur (14) étant disposé en forme de méandres ou en forme de S entre les différents compartiments (34, 35, 37).
